# EUROPEAN PATENT APPLICATION

(11) **EP 1 953 037 A1**
(43) Date of publication of application: **06.08.2008**
(21) Application number: 08005553.6
(22) Date of filing: 20.01.2000
(51) Int. Cl.: B60P 1/00, B62B 3/00, B60P 3/055

(54) **Beverage distribution system and method of its manufacture and operation**

(30) Priority: 20.01.1999 US 116473 P; 20.05.1999 US 315403; 20.05.1999 WO PCT/US99/10844; 10.01.2000 WO PCT/US00/00542
(62) Divisional of application: 00909937.5
(71) Applicant: Coca-Cola Enterprises Inc., Atlanta, Georgia 30339 (US)
(72) Inventor: Strohfus, Norman C., Eagan, MN 55121 (US); Grace, Robert W., Twinsburg, Ohio 44087 (US); Glancy, David J., Twinsburg, Ohio 44087 (US)
(74) Representative: Gilmour, David Cedric Franklyn

(57) **Abstract**

A transport cart, adapted to be supported for travel in a van body having a floor, and joined to like carts positioned fore to aft in laterally spaced rows leaving an aisle between them in the van body, the cart having a bottom on which stacks of product are carried on mini-pallets at a level above said van floor and an open front side to permit the unloading of product from said bottom comprising: a deck movable from a stowed retracted position to an extended generally horizontal aisleway-forming operative position in which laterally aligned opposed like carts in the rows can form a false floor aisleway at substantially the level of said cart bottom.

## Description

This invention is entitled to the priority of U.S. provisional application Serial No. 60/116.473, filed January 20, 1999. PCT patent application entitled TRANSPORT CART SYSTEM AND METHOD OF ITS MANUFACTURE AND OPERATION, filed January 5, 2000, U.S. provisional application Serial No. 60/094,439. filed July 28, 1998 now abandoned, and PCT application No. PCT/US99/10844, filed May 20, 1999, and relates generally to the methods and apparatus to facilitate the distribution of beverages, and more particularly to the manufacture and handling of transportation devices and methods for carrying products such as stacked cases of beverage containers for transport in a delivery vehicle. Typically, the vehicle moves the carts from a manufacturing facility or distribution center to a retailer.

### BACKGROUND OF THE INVENTION

The current method of beverage distribution essentially considers the beverage truck driver a salesman. The driver's truck is loaded with a selection of beverages, and the driver calls on accounts on a route. At each account, the driver determines what beverages are required or desired by the account, then the driver locates the beverages in his truck, unloads the beverages and delivers them to the account. This process would be relatively easy if only a single beverage were involved. For instance, if the driver only distributed a single brand of cola, his truck would be completely loaded with that one beverage, and it could be easily unloaded at each account, and accounts could be serviced until the truck was completely empty.

Accordingly, it is desirable to create a new beverage delivery system which takes full advantage of information available when a truck is loaded to improve delivery service. The truck can be loaded to specifically meet the orders of each account on a route and to minimize the time needed to select and unload the beverages ordered by each individual account.

Side loading route trucks are typically used for commercial deliveries to sales outlets that receive merchandise through a door at ground level, as opposed to a loading dock. Most bulk deliveries for large accounts are made utilizing tractor trailer units to deliver to a loading dock. The trailer has a rear door that open into a large interior area with a flat floor. The typical chain store wants such bulk delivery trucks in and out of their loading docks within a very narrow time span each morning. Furthermore, chain stores usually prefer to be the first delivery on a route. In order to satisfy these customer requirements, bottlers employ a large number of bulk rigs. Some of these bulk rigs may be left idle for much of the day following morning deliveries. The number of bulk rigs that are needed can be reduced by attempting to negotiate appropriate delivery times with chain stores, however this has not been a totally satisfactory solution. In an effort to overcome this problem. U.S. Patent No. 4,659,132 describes a side load trailer which can be configured to carry bulk pallets. While this invention addresses the need to more efficiently utilize trailers, it does not provide for more efficient delivery of beverages to route accounts.

A principal object of the present invention is to provide a more efficient system for getting products from the point of manufacture or distribution to the retailer.

It is also an object of the present invention to facilitate the loading of beverage trucks with beverages sorted by account order rather than SKU.

It is a further object of the invention to provide improved truck designs to facilitate both the loading and unloading of trucks with beverages sorted by account order.

It is yet another object of the invention to provide truck designs that will permit loading combinations of bulk and route beverage orders.

It is another object of the invention to provide a mobile beverage cart to facilitate the loading and unloading of beverage trucks with beverages sorted by account order.

It is yet a further object of the inventor to provide a novel pallet for use with a matching hand truck to facilitate the loading and unloading of beverage trucks with beverages sorted by account order.

### SUMMARY OF THE INVENTION

A transport and delivery system constructed and operated according to the invention utilizes a series of preferably wheeled carts having upstanding back and side retention members or walls, which have been loaded at a manufacturing and/or distribution facility with stacks of containers advantageously presorted by brand and quantity according to the orders to be filled. These stacks are preferably built on mini-pallets such that a given cart may be loaded with one or several (four for example) of such mini-stacks.

The location of each prefilled order may be recorded as to which cart or carts are involved, and as to the particular location of the stack or stacks within the carts. For example, a given order might be contained in cart No. 4, stacks 1-3. Once filled with product, the carts are wheeled into an elongate delivery van or trailer of conventional manufacture and positioned so that the carts line the opposite walls of the trailer in two laterally spaced rows leaving a center aisle down the middle of the trailer wide enough to access the carts with a two-wheeled hand truck.

The cart floors are preferably supported above the level of the floor of the trailer on wheels or other appropriate motive supports. A false floor may be provided along the aisle to elevate the walkway to the level of the cart floors, so that an operator, using a two-wheeled hand truck, is able to access the mini-stacks in the carts with the hand truck. The false floor is provided by opposing sets of retractable deck sections carried off the forward edge of each cart which can be moved into the aisle to form an elevated sectionalized walkway.

The deck sections have automatically folded and restored front support leg structures. The deck sections are disclosed as including at least one gas spring operative to assist an operator to move the deck sections between the extended and stowed positions. The springs also exert a constant downward biasing force on the deck sections which serves to maintain them in position during transport over any rough terrain and further act to retain the deck sections in the stowed and use positions.

The trailer van, which preferably opens at its back end, is fitted with a powered lift gate that can be raised to the level of the floor of the trailer. The false floor is thus supported above the level of the lift gate. According to a further aspect of the invention, a ramp is positioned between the false floor and lift gate to provide a transition from the elevated false floor to the lift gate. The ramp preferably includes a foldable section that, in use, extends out of the trailer and onto the lift gate and, when stowed, is hinged inwardly of the trailer van to accommodate closing of the back door(s) of the trailer.

According to the operation of the system, the carts, once loaded into and locked in the trailer, are transported along with the hand truck from the manufacturing and/or distribution center to the various retail delivery sites. Since the orders for each site may be prebuilt according to the type and quantity of the various brands of beverages or other products, the operator need only locate the order, remove the ministack(s) of containers from the cart(s) with the hand truck, and wheel the load(s) along the elevated false floor formed by the deck sections, down the ramp and onto the elevated lift gate, which is then lowered to the ground to enable the operator to wheel the order into the facility of the business receiving them. When the deliveries are completed, the emptied trailer may then be returned to the distribution center where the deck sections are returned to their stowed positions, and the empty carts are unlocked and removed from the trailer. The trailer can then be loaded with a waiting set of carts preloaded with additional orders, and the off-loaded emptied carts can be recycled to handle future orders.

Considerable labor and time is saved with this system, enabling delivery personnel to service a greater number of retail customers in a given region, complete their routes in less time, and service expanded territories.

### THE DRAWINGS

A presently preferred embodiment of the invention is disclosed in the following description and in the accompanying drawings, wherein:
Figure 1 is a schematic illustration of the ordering and delivery process in an advanced order fulfillment system;
Figure 2 shows mobile beverage carts according to the present inventions being used to gather selected beverages by account order in a beverage warehouse facility;
Figure 3 is an schematic perspective rear elevational view of a transport system constructed according to the invention;
Figure 4 is a diagrammatic top plan view schematically illustrating the positioning of the carts within the trailer;
Figure 5A is a front elevational view of a transport cart constructed according to a presently preferred embodiment of the invention;
Figure 5B is an elevational view of a leading side of the cart of Figure 5A;
Figure 5C is an elevational view of the opposite trailing side of the cart of Figure 5A;
Figure 5D is a top plan view of the cart of Figure 5A;
Figure 5E is an enlarged fragmentary cross-sectional view taken generally along lines 5E-5E of Figure 5D;
Figure 5F is a top plan view like Figure 6 but showing a cargo retention tarp in its use and stowed positions:
Figure 5G is an enlarged fragmentary sectional view taken generally along lines 5G-5G of Figure 5A;
Figure 5H is an enlarged fragmentary cross-sectional view of a portion of the cart, taken generally along lines 5H-5H of Figure 5C;
Figure 5I is a bottom plan view of the deck of the cart of Figure 5A;
Figure 5J is an enlarged cross-sectional view taken generally along lines 5J-5J of Figure 5I;
Figure 6A is a bottom perspective view of a mini-pallet constructed according to the present invention;
Figure 6B is a top perspective view of a mini-pallet constructed according to the present invention;
Figure 6C is a side sectional view of the mini-pallet of Figure 6B;
Figure 6D is a front plan view of the mini-pallet of Figure 6B;
Figure 7A shows a flexible restraining door adapted for use across the aisle of a trailer according to the present invention or otherwise to restrain product on mini-pallets not located in a mobile beverage cart;
Figure 7B shows a flexible restraining door adapted for use with a mobile beverage cart according to the present invention;
Figure 7C is an enlarged fragmentary front elevational view showing details of the cart locking system;
Figure 8A a side elevational view of a hand truck having a nose plate constructed according to the present invention;
Figure 8B is an enlarged fragmentary sectional plan view taken generally along lines 6B-6B of Figure 6A; and
Figure 9A shows a schematic layout of a rear entry route delivery vehicle utilized with mobile beverage carts according to the present invention;
Figure 9B is a perspective view of a powered gate on a rear entry route delivery trailer according to the present invention;
Figure 9C is an enlarged fragmentary plan view showing details of the cart lock system;
Figure 9D is a fragmentary side elevational view showing details of the cart locking system,
Figure 9E is an enlarged fragmentary cross-sectional plan view taken generally along lines 9E-9E of Figure 9D;
Figure 9F is an exploded view of an alternative pin latching system utilized to hold mobile beverage carts to the delivery trailer wall according to the present invention;
Figure 9G shows the latching system of Figure 9F restraining a corner post of a mobile beverage cart;
Figure 10A is a schematic layout of a rear entry route delivery vehicle according to the present invention, which utilizes folding bay walls to contain beverage pallet stacks according to the present invention;
Figure 10B details the folding bay wall structure of the trailer of the rear entry route delivery vehicle of Figure 10A;
Figure 11A is a schematic layout of a rear entry route delivery vehicle configured for combination bulk and route delivery;
Figure 11B is an enlarged fragmentary cross-sectional view taken generally along lines 11-11 of Figure 4:
Figure 12 shows a side plan view of an alternative mobile beverage cart utilized with a forklift rather than casters.
Figure 13 is an enlarged fragmentary elevational view of an accompanying ramp constructed according t the invention;
Figure 14 is an elevational view of a modified cart side and back wall.

### DETAILED DESCRIPTION

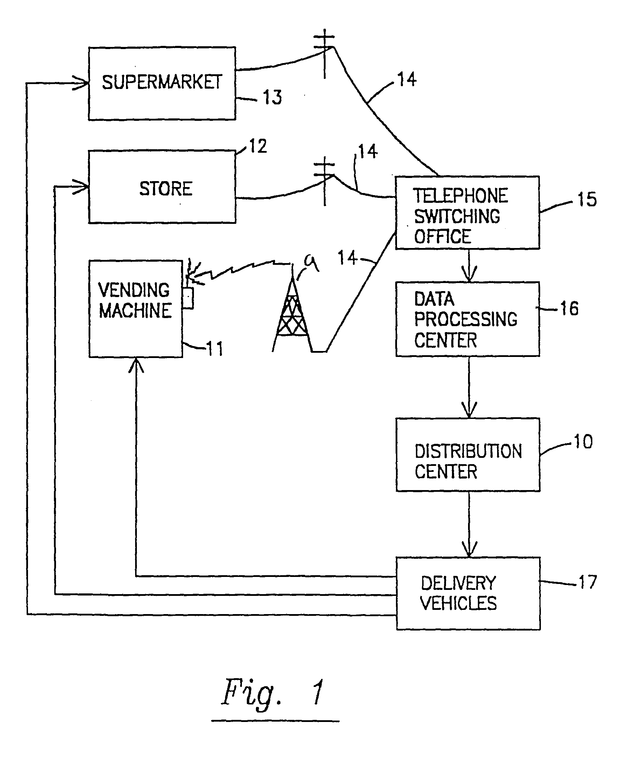

Figure 1 shows the communication which takes place prior to the loading and delivering of beverage products according to the present invention. Specifically, bulk customers such as mass-market and supermarket stores **13** with loading docks, smaller retailers accepting delivery at ground level **12,** and even individual vending machines, communicate their product needs by telephone **14** as illustrated, computer networks and satellite linkages to the data processing facilities **16** of the beverage manufacturer. The order information is processed at the data center **16** and made available to the personnel in the beverage warehouse **10.** Traditionally, both bulk delivery tractor-trailer trucks for mass-market and supermarket stores and side load route trucks for smaller accounts would be utilized as delivery vehicles **17.** However, according to the present invention, both bulk and route accounts may be delivered from the same trailers. Accordingly, a preferred delivery trailer will comprise a 28'-6" long rear entry trailer, typically with a 102" outer width and 98" inner width. The trailer requires approximately 12-1/2'road clearance. The trailer is provided with a rail-type lift gate, which is ICC bar and dock lock compatible. Preferably the lift gate will be able to proceed from up to down location within 15 seconds, and have a capacity of 3,500 to 4,000 lbs. The gate should have approximately a 5' deep work area, with a 16" taper downward toward the ground. Also, it is preferable that the ramp operational controls travel with the operator. An optional curbside ramp may also be provided.

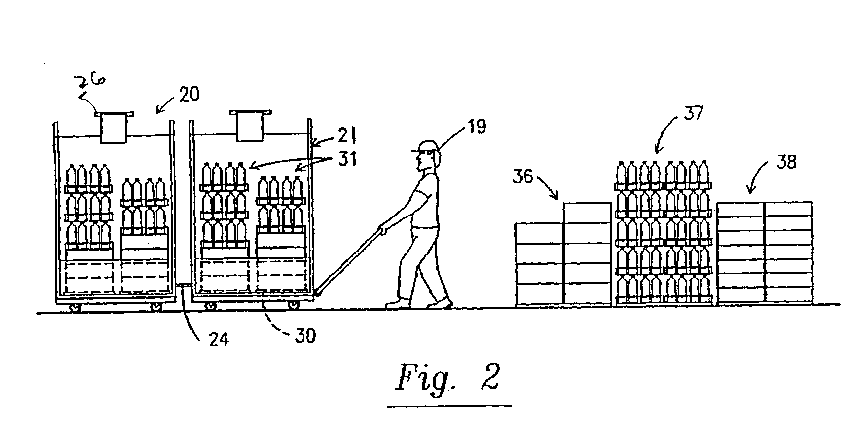

Figure 2 illustrates one method of utilizing the mini-pallets **30** and mini-pallet containers **21** according to the present invention to prepare account orders for loading in delivery vehicles. A person designated as the order filler **19** for a particular route will be provided with a printout or handheld computer display showing the orders of each customer on the route. Preferably the printouts will then be attached to clips **26** on the mobile beverage carts **21** for easy reference during picking and delivery. The order filler **19** will take an empty mobile beverage cart **21** and place four stacks including mini-pallets **30** on the floor of that container **21.** It will be understood that mini-pallet containers **21** could be configured for less or more stacks but four is a good compromise of weight, maneuverability and efficiency. Furthermore, a plurality of mini-pallet containers **21** could be joined together such as by connector **24.** Each customer order is then built separately and column stacked **31** on one or more of the mini-pallets **30.** Once the mini-pallet container **21** is full or the order is complete, the filler **19** may load a delivery vehicle **17.**

It will also be understood that mini-pallet **30** product stacks **31** may be assembled by an automated processes rather than the manual pulling of mini-pallet containers **21** past appropriate warehouse beverage pallets **36,37,38** as illustrated in Figure 2. Instead, layers of product or individual product cases may be picked and placed on a conveyer system and released either manually or by recognition from a vision scanner to the appropriate location to create each product stack **31** on mini-pallets **30.** Appropriately configured products stacks **31** may then be loaded on their mini-pallets **30** either into mini-pallet containers **21** or directly onto a delivery vehicle **17.**

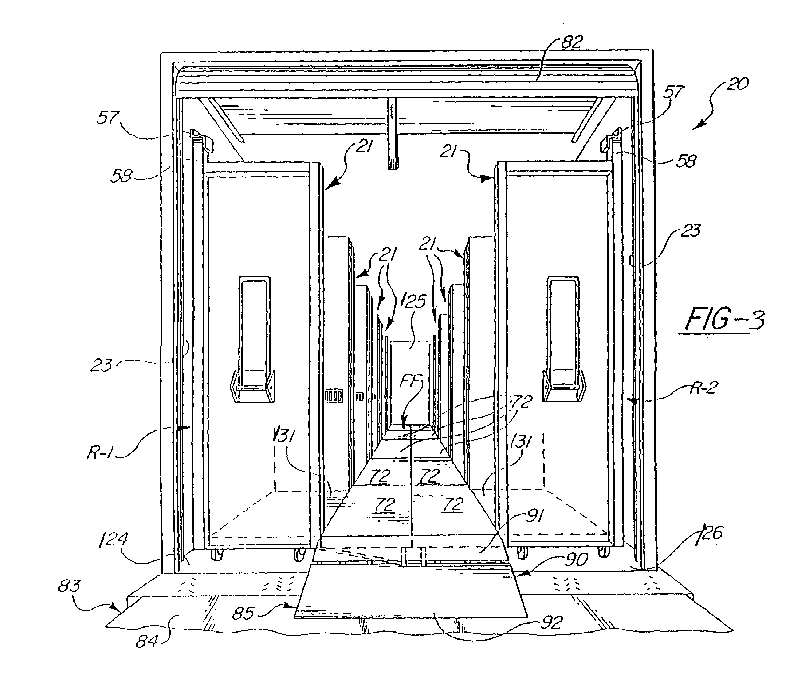

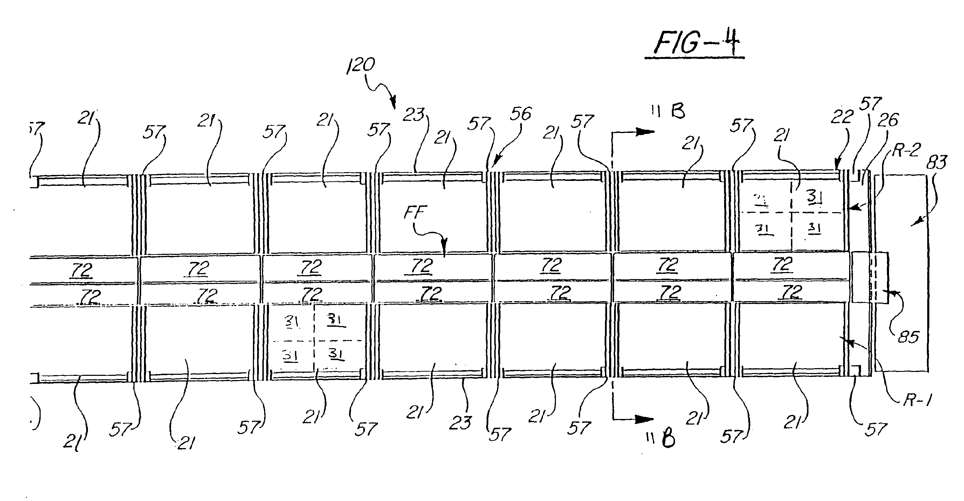

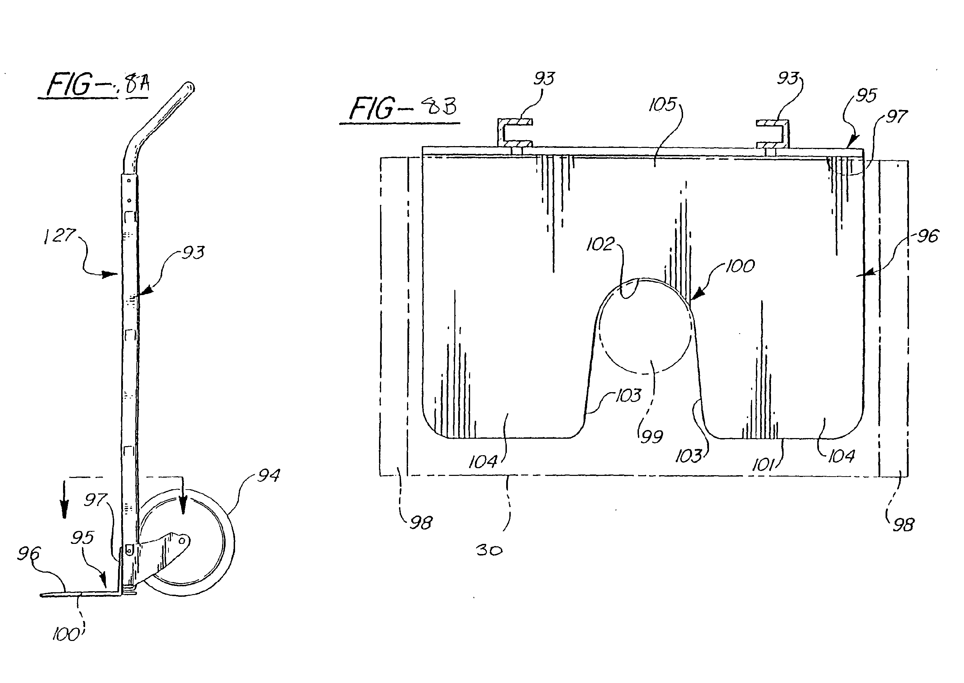

A product support and delivery system constructed according to the present invention is shown generally at **20** in Figures 3 and 4 and comprises a plurality of wheeled modules or carts **21,** positionable within a van trailer **22** along opposite side walls **123** thereof on a floor **124** of the trailer **22** in longitudinally extending rows R¹, R² which extend from a front wall **125** of the trailer **22** toward the back **126** thereof. Space is provided between the adjacent rows R¹, R² , defining a center aisle A for accommodating the passage of a hand truck **127** (Figures 8A, 8B) used by an operator to remove multiple mini-stacks of palleted containers **31** from the carts **21** for transport to a retail sales facility.

The interior of the trailer **22** is preferably wood with an E-track on the sides and front. The walls and ceiling should be insulated and there should be interior light with a light switch inside the trailer **22.** Typical trailers **22** shown in Figures 3, 4, 9A, 9B. and 11A will hold 7 mobile beverage carts such as mini-pallet containers **21,121** as illustrated in Figures 3, 4 and 7A. along each side, and the center aisle may be utilized to hold pallets to form a false bottom and a curb ramp **154.** Optional equipment will include a heater, an automatic trailer door opener, a box for deposit returns, and pineal hooks in order to allow a single tracker to pull two or three trailers.

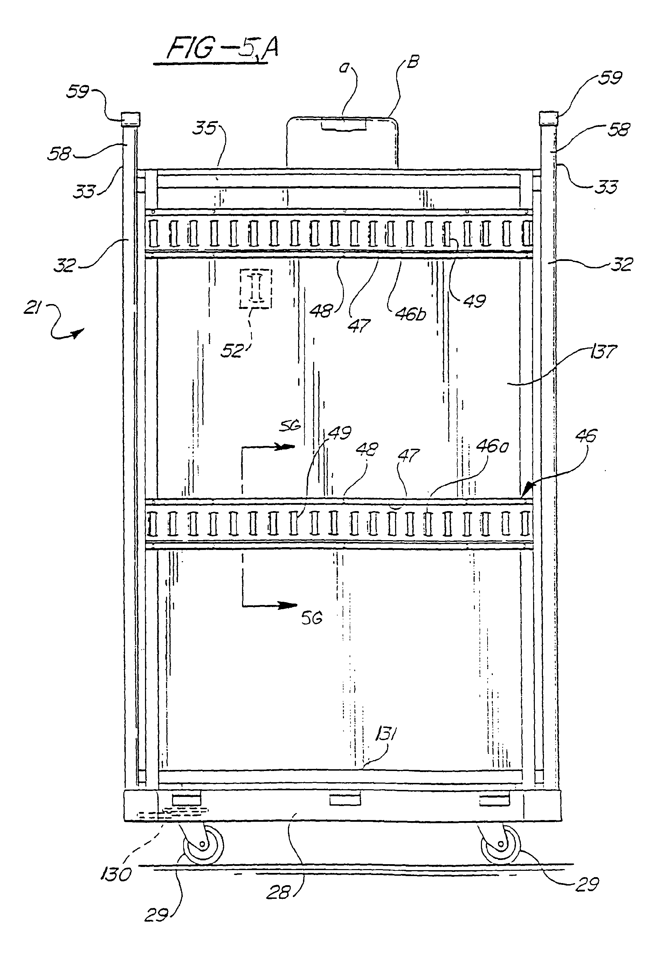

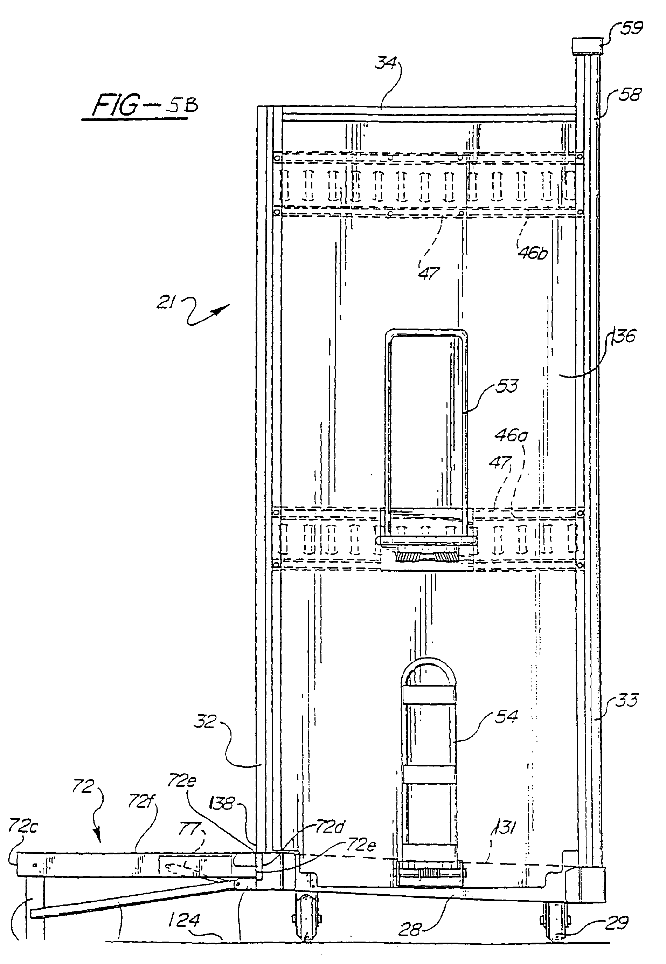

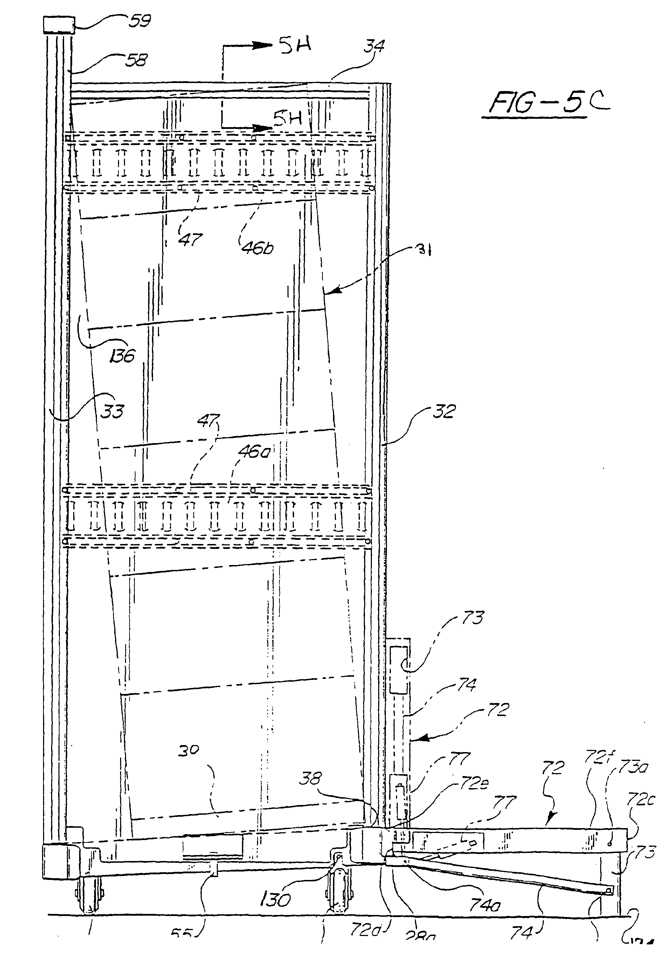

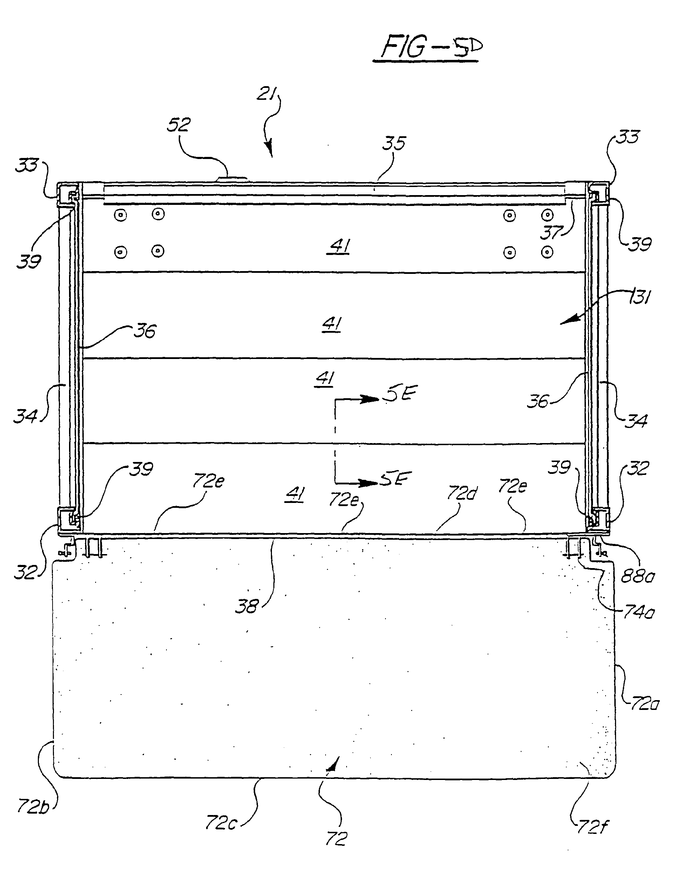

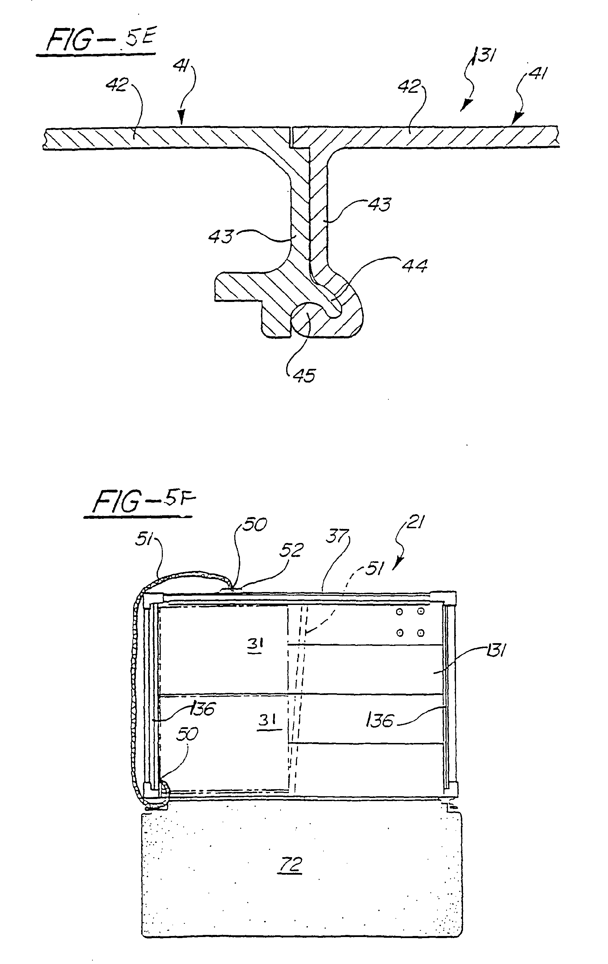

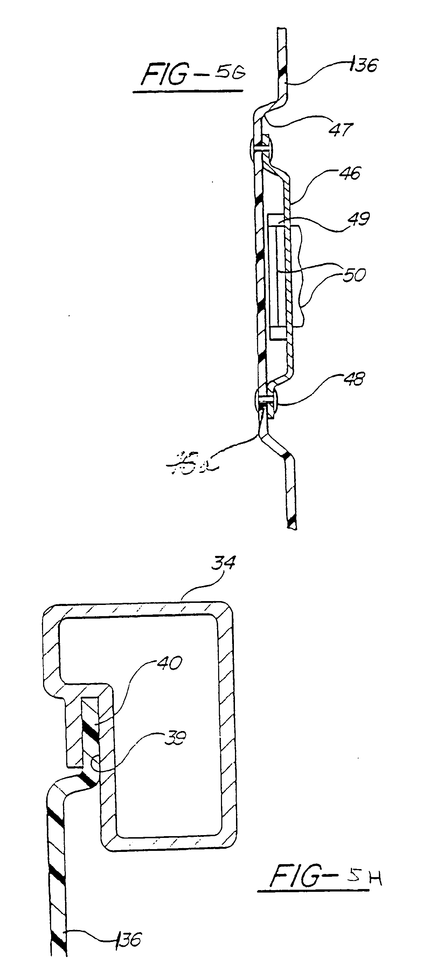

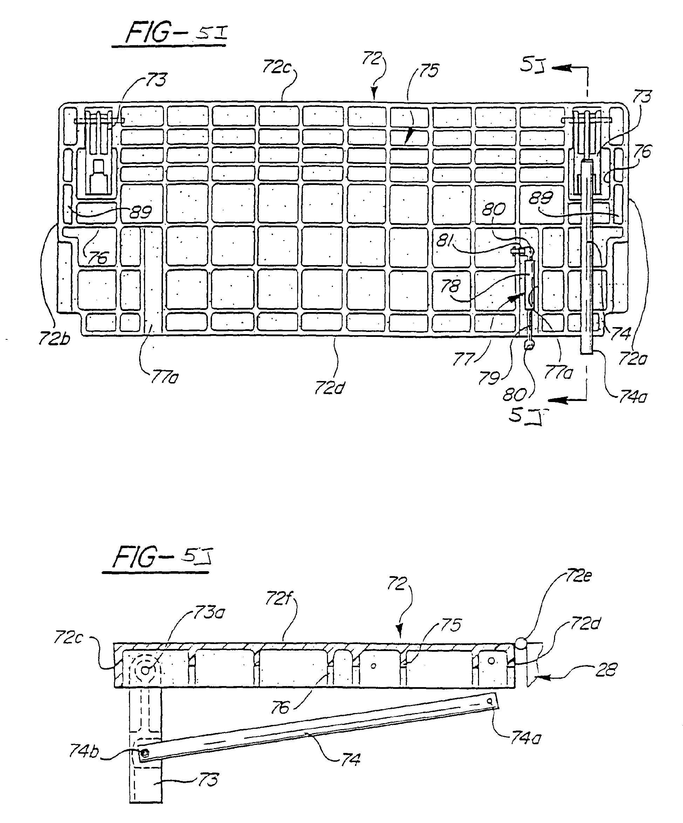

Turning now to the construction of the cart **21,** and with reference to Figures 5, 7C, 9C and 11B, and initially to Figures 5, the identical carts **21** each include a rigid frame structure provided by a rectangular base frame **28** mounting a set of four caster wheels **29,** one of which is lockable via a lock pin mechanism 130 (Figure 5C) to preclude normal movement of the cart **21** when locked. A floor or product support member **131** on the cart **21** is carried by the base frame **28** to provide a surface above the van floor on which the stacked containers **31** are supported. A set of front **32** and back **33** vertical corner rails are fixed at their lower ends to the corners of the base frame **28** and extend upwardly therefrom. They are interconnected along three sides adjacent their upper ends by upper side **34** and back **35** cross rails.

Each cart **21** is closed on three of its sides and incorporates a pair of side panels **136** and a back panel **137.** The front **138** of the cart **21** is open to permit loading and unloading of the stacked containers **31** (Figure 5C) from the cart **21.** The side and back panels **136,137** are secured to the framing of the cart and may be fabricated from any of a number of tough, generally rigid materials, such as aluminum plating or synthetic plastic sheets. The panels **136, 137** are preferably molded organic polymeric structures fabricated from materials such as a heavy gauge thermoformed polypropylene or polyethylene, engineered plastics, or the like, to provide lightweight, durable, corrosion resistant, readily cleanable walls for the cart **21.** Figure 5H illustrates the preferred manner of securing the panels **136, 137** to the rails **32-35** and base **28.** The rails **32-35** are preferably formed as extrusions and include a channel or groove **39** in which a peripheral tongue **40** on the panels **36, 37** is received, such that the panels **136,137** are captured and permanently retained by the base **28** and rails **32-35** without need for fasteners.

The floor **131** of the cart **21** is preferably angled so as to tilt downwardly from the front **138** toward the back **137** of the cart **21** at an angle of about 3 to 5 degrees. The slight angle of the floor **131** serves to tilt the stacks of containers **31** inwardly of the carts **21** away from the aisle A to stabilize the load during transport, as illustrated in Figure 5C.

Referring to Figures 5D and 5E, the floors or bottom supports **131** of the carts **21** are preferably fabricated from a series of elongate floor sections **41,** each having a flat load-supporting upper wall **42** and underlying beam formations **43** along their edges. The beams **43** of adjacent panels have interlocking portions **44, 45** (Figure 5E) that, when interfitted, join the panels **41** to provide a continuous reinforced floor surface **31** which is secured to the base frame **28,** such as by welding or with mechanical fasteners. The interior space of each cart **21** is sized to accommodate multiple, and preferably four, mini-stacks of the containers **31,** each supported on an associated mini-pallet **30,** as illustrated diagrammatically in Figure 5C.

Two rows of commercially available E-track **46a. 46b** extend horizontally along and are secured to the interior surface of the side **136** and back **137** panels. One row **46a** is located about midway up the panels **136, 137,** and an upper row **46b** is located adjacent the upper ends of the panels **136, 137.** The E-track **46** is accommodated within recesses or channels **47** formed in the panels **136, 137,** as illustrated in Figure 5G, such that the face of the E-track **46** lies generally flush with the inner surface of the panels **136, 137.** The E-track sections **46** may be joined to the panels **36, 37** by means of rivets **48** or the like extending through openings **48a.** The tracks **46** have a series of punched out openings **49** that receive angular end hooks or clips **50** (Figure 5F) secured to the opposite side edges of a retaining tarp or curtain **51.** The tarp **51** can be removed from the stowed position shown and, as illustrated diagrammatically in broken lines in Figure 5F, the tarp **51** is operative to wrap about a partial load to assist in securing the stack of containers from tipping forwardly out of the carts **21** during transport. The full extension of the E-track **46** across the side **136** and back **137** panels enables the tarp **51** to secure virtually any size load. The general use of an E-track **46** and curtain **51** securement system is known, per se, for retaining cargo in a trailer.

When loading the palleted containers **31** into the carts **21,** it is desirable to have the curtain **51** positioned clear of the open front **138** of the cart **21** so as not to interfere with loading. As shown in Figures 5A and 5F, the back panel **137** of the cart **21** is fitted with the keeper bracket **52** on the exterior side thereof in position to receive and releasibly retain the upper end clip **50** of the curtain **51** when not in use. As illustrated diagrammatically in Figure 5F, extending the curtain **51** exteriorly of the cart **21** around to the back of the cart **21** enables the end clip **50** to be secured in the keeper **52** to support the curtain **51** clear of the open front **138** during loading.

As shown best in Figure 5B, the leading side of the cart **21** is fitted with an upper pull handle **53** and lower tow bar **54** which are shown spring biased to a stowed position against the side panel **136,** but which are swingable outwardly of the side panel **136** to an extended position to facilitate handling of the cart **21.** As shown in Figure 5C, the trailing side of the cart **21** is fitted with a hitch pin **55** projecting downwardly from the base frame **28** and operative to receive and releasibly retain the tow bar **54** of another cart to enable a number of the carts **21** to be trained together for transport.

In use, a plurality of the carts **21,** located at a manufacturing or distribution center, are loaded with one or more mini-stacks of the containers **31** according to the brand and quantity called for bv the particular retail orders to be delivered on a delivery route. The illustrated carts **21** are designed to hold four such mini-stacks of containers **31** two deep and two wide within the bay of each cart **21** as illustrated in Figure 4. In this way, each order is preassembled on the mini-pallets **30** and loaded onto the carts **21** in preparation for delivery to the retail sites. The location of each order is recorded such that an order might be contained in cart 4, pallet 2, for example. The carts **21** are equipped with a clip board B (Figure 5A) secured thereto, with clip **26,** for holding written records.

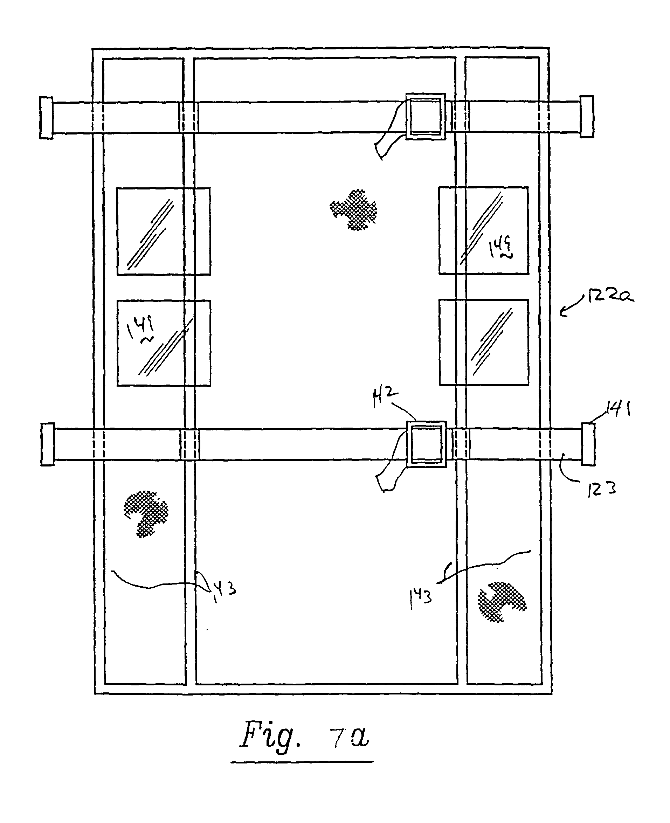

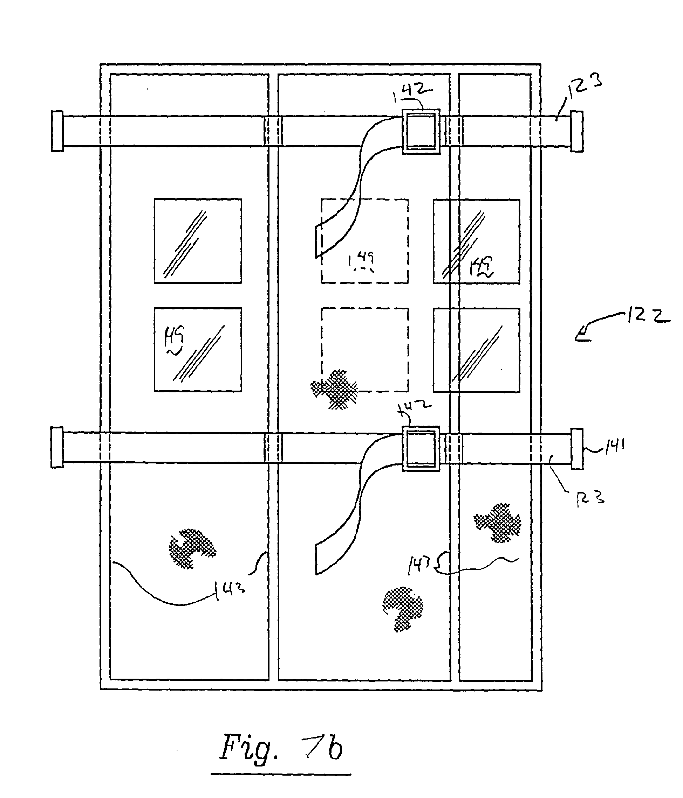

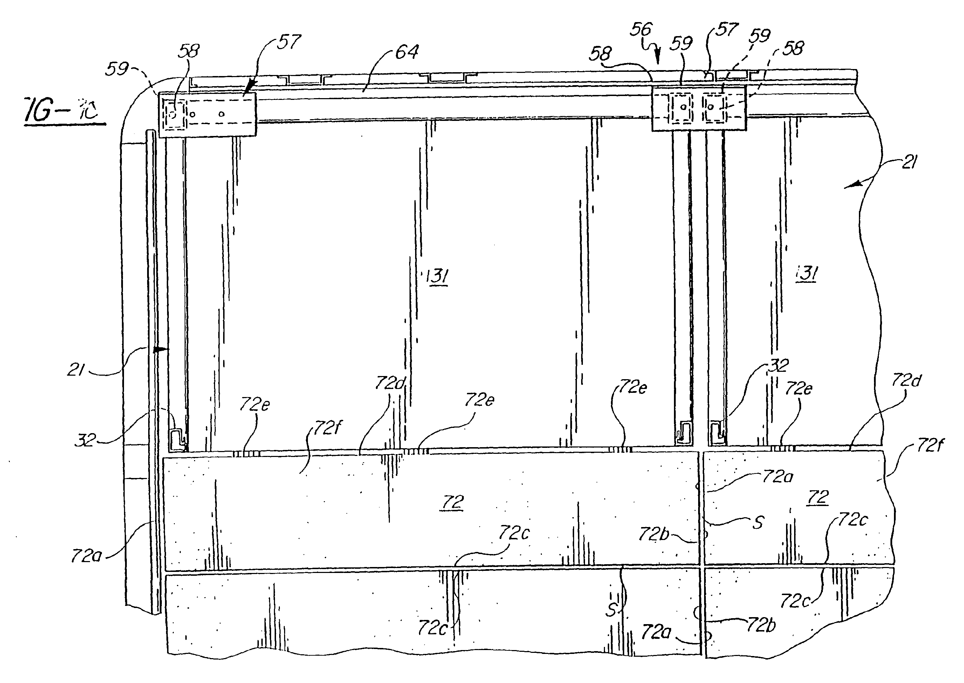

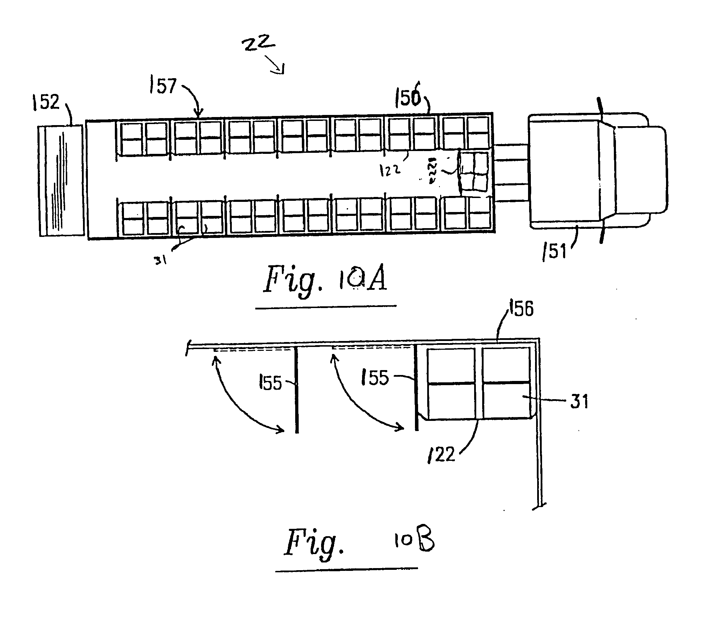

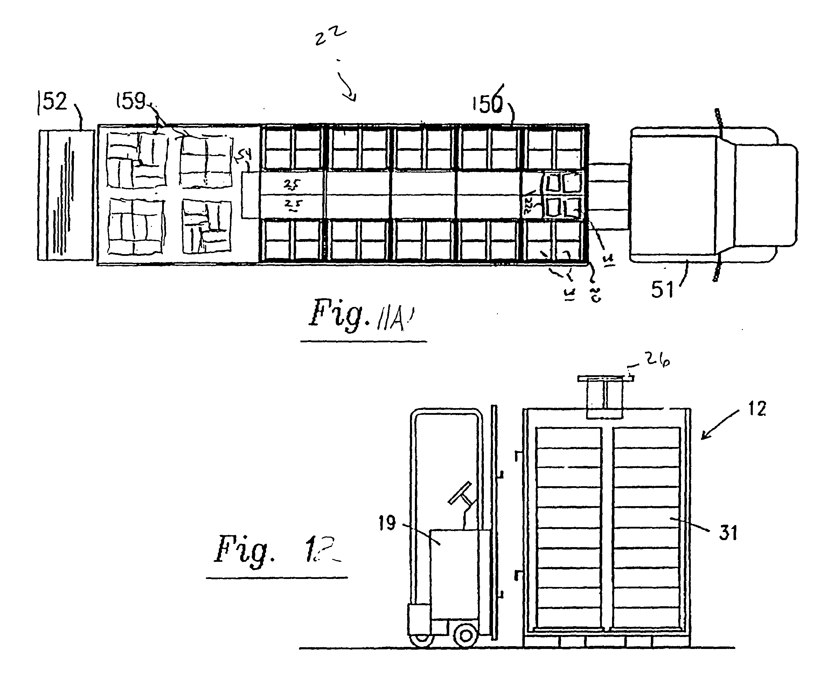

Figure 7B shows a canvas panel **122** in detail with straps **123,** ending at E-track buckles **41** and having tightening buckles **142.** The panel **122** is also fitted with a plurality of see-through pockets **149** on each side which may be used in lieu of the clip **26** to hold customer order information. Flexible doors **122** may optionally be fitted with E-track clip pieces **140** to permit modified flexible doors **122a** shown in Figure 7A to be utilized to secure mini-pallets loads **31** in the aisle of the trailer as shown in Figures 10A and 11A. The preferred embodiment of a canvas panel **122** is about 5' in height and about 39" in width with a plurality of battens in batten pockets **43** to provide vertical rigidity. In addition to batten pockets **143** at the edges of canvas door **122,** there is an additional batten pocket inset approximately 16" from the left side and another batten pocket inset approximately 7" from the right hand side. The canvas strap **123** will typically overhang the width of the canvas panel section by approximately 5" on each side. The alternative canvas door **122a** utilized across the trailer aisle is typically approximately 54" in width with the middle batten pockets inset approximately 7" from each side.

Returning to the loading process, once the mini-pallet container **21** has been loaded and the product secured with canvas door **122** the mini-pallet container **21** is brought to the dock area where a checker will review the product in the container **21** against the pallet tickets attached to clip **26** or placed in pockets **149** for approval. Once approved, the mini-pallet container **21** is rolled into the trailer **22** and attached to the trailer wall as by a positioning lock system **56.**

Once loaded, the carts **21** are wheeled into the trailer **22** and positioned end-to-end along the side walls **23** forming the two long rows R¹, R² of carts, as illustrated best in Figure 2. The front-to-back depth of the carts **21** is dimensioned to leave space between the cart rows R¹, R² to define the center walkway or aisle **58** extending the length of the trailer **22.** It is of sufficient width to accommodate the operator and a hand truck **127** (Figures 8A and 8B). The carts **21** are oriented such that their open fronts face the aisle **58.** In the present example, the carts **21** have a depth of about 29 inches, providing the aisle **58** formed within a conventional van or enclosed trailer with a width of about 40 inches between the rows R¹, R².

Referring to Figures 4 and 9C, 7C, 9D and 9E, a cart positioning/lock system **56** is provided for properly locating and locking the carts **21** in position within the trailer **22.** The system **56** includes a plurality of cart brackets **57,** fixed to the van side walls **23** at predetermined locations along the length of the trailer **22,** which engage corresponding portions of the carts **21** to locate and secure the carts **21** in position. The locations of the brackets **57** correspond preferably with the locations of the ends of the carts **21** when positioned in their rows R¹, R² along the sides **23** and preferably in relation to the location of upright locking post portions **58** projecting from the back corners of each cart **21.** Referring also to Figures 4 and 5. the locking posts **58** preferably comprise extended sections of the back corner rails **33** which project above the top rails **34, 35** of the carts **21.** The upper ends of the locking posts **58** are each fitted with an enlarged end cap **59** having sides **60** thereof projecting laterally outwardly of the posts **58** and fabricated preferably of a tough, low friction, non-marring material such as polypropylene, polyethylene, glass-filled nylon, or the like. The end caps **59** each have a top wall **61** that extends across the top of the post **58** on which it is mounted and each is formed with an opening or socket **62** therein for purposes to be explained hereinafter.

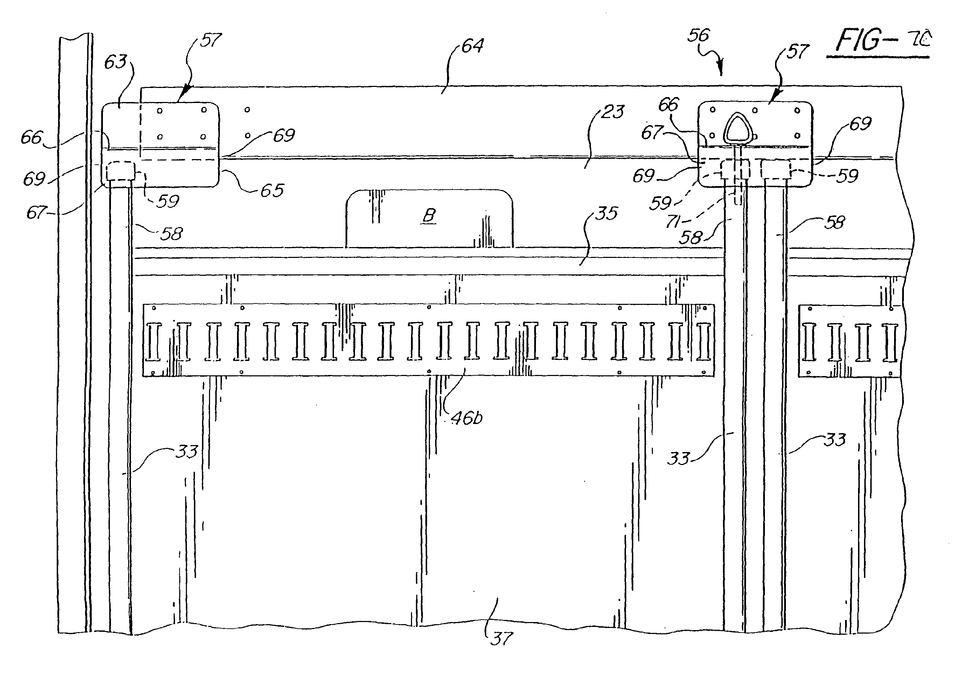

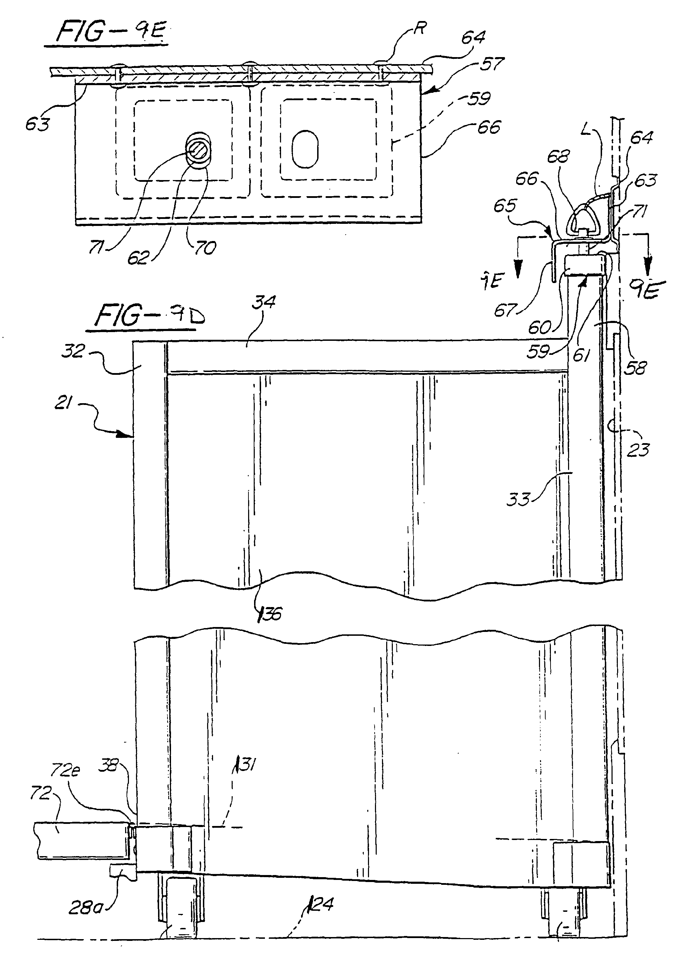

The brackets **57** are fabricated of a strong, rigid material such as aluminum or structural plastic material, and each has a base portion **63** that is secured by rivets R or the like to the side wall **23, 24** of the trailer **22,** and preferably to a cargo track 64 that is fixed to the side wall **23. 24** and extends the length of the trailer in position to mount the brackets **57.** The base portions **63** of the brackets **57** support cart retaining portions **65** which are configured and positioned to retain the locking posts **58** of the carts **21.** The cart-retaining bracket portions **65** preferably have generally an L-shaped configuration, including a top wall portion 66 that extends transversely away from the side wall **23** on which the bracket **57** is mounted in a generally horizontal plane above the level of the top posts **58.** They further include a forward retaining wall section **67** that projects downwardly from the top wall portion **66** to a level below the free ends of the locking posts **58,** and preferably beyond the end caps **59** as best shown in Figures 7C and 9D. The L-shaped configuration of the cart-retaining portions **65** provides a locking channel **68** that is closed at the top and front by the top wall and retaining wall sections **66, 67,** open at the bottom, and open at opposite longitudinal ends **69.**

As shown best in Figures 9C, 7C, 9D and 9E, the locking channels **68** are each dimensioned to receive at least one, and preferably two, locking posts **58** of adjacent carts **21** into the channel **68** from the open ends **69** of the brackets **57.** The effective lateral depth dimension is selected such that the forward retaining wall section **67** is positioned outwardly of the side wall **23** a distance sufficient to allow the end caps **59** of the locking posts of the carts **21** to pass behind the wall section **67** when the carts **21** are moved along the side wall **23** of the trailer **22** so as to position the locking posts **58** within the channels **68.** but yet be fairly close in proximity to the posts **58** to restrict the lateral inward movement of the carts **21.** The structure positively locates and retains the carts **21** against the side walls **23** of the trailer **22.** It is preferred that the depth of the channels **68** somewhat exceed the minimum spacing requirements such that a limited amount of play exists between the brackets **57** and the posts **58** to account for tolerances and for ease of moving the posts **58** into and out of the channels **68** (e.g., about 1/2 inch ofplay). The length dimension of the brackets **57** is selected to be at least as long as, and preferably greater than, the distance between the locking posts **58** of adjacent carts **21** positioned in their rows R¹, R² in substantially end-to-end abutting relationship, as best shown in Figures 7C and 9E. so as to accommodate both of such locking posts **58** within the same locking channel **68.** The center-to-center spacing of the brackets **57** thus equals or closely approximates the end-to-end spacing of the carts **21.**

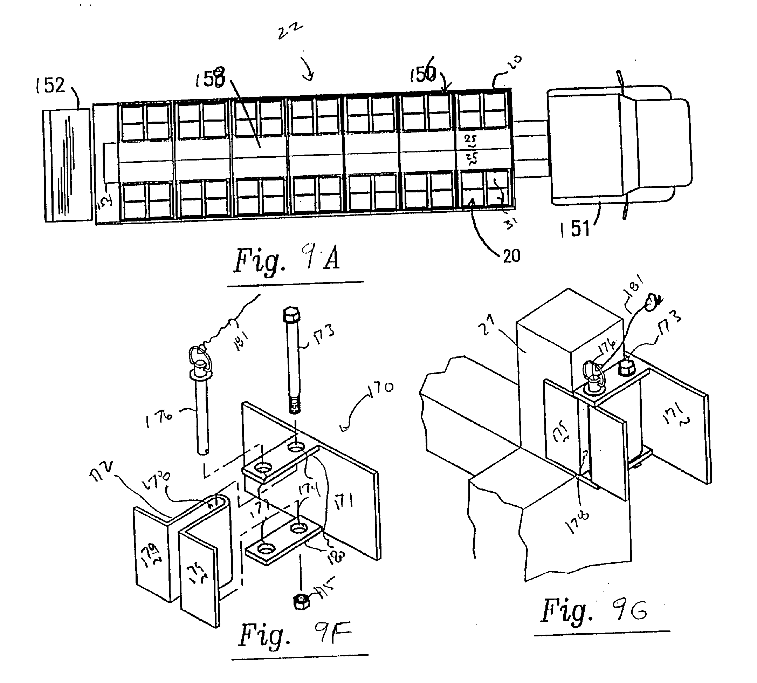

Alternative means of securing the mini-pallet containers to the trailer **22** walls are possible as illustrated in Figs. 9F and 9G where the pin lock consists of a base plate **171** with protruding upper and lower clevis type members **180** each having first apertures **174** and second apertures **177.** A U-shaped member **172** having blades **179** on either side of channel **178** is then placed between the clevis members **180** and restrained there by nut **175** and bolt **173.** When so restrained by the bolt **173** passing through channel **178** and first apertures **174**, the U-shaped member **172** is free to turn from side to side. A mobile beverage cart **21** is then pushed into position against the protruding clevis type members **180** and the U-shaped member **172** pushed against the corner post **27** of the mobile beverage cart until one of the forward plates **179** restrains that post from moving forward. Pin **176** is then placed through second apertures **177** of the clevis type member **180.** This prevents the U-shaped member **172** from rotating to free the corner post **27.** A similar pin lock **170** is also applied to the opposite rear lower post of the mini-pallet container **21.** Once all fourteen mini-pallet containers **21** are in the trailer **22,** the fold down floors **25** are lowered forming a false floor. In addition, the fold down floors **25** tend to restrain the lower portions of the mini-pallet containers from rolling away from the trailer walls **56.** Alternatively, if fold down flooring **25** is not provided on the mini-pallet containers **21,** plastic pallets may be placed in the aisle **158** to accomplish a similar purpose. At the end of the false floor created either by pallets or fold down floor **25,** a ramp section **154** is added to permit use of handcart **127b.**

Referring now particularly to Figure 9E, the top wall section **66** of each bracket **57** is formed with an opening **70** that is positioned to align with the socket **62** in the end cap **59** of the aft locking post **58** of each cart **21** (that is, the locking post **58** of each cart nearest the rear end **26** of the trailer **22**)**.** A locking pin **71** associated with each bracket **57** is extendable into the aligned openings **70, 62** to lock the carts **21** to the brackets **57** and positively locate and secure the carts **21** longitudinally of the trailer **22.** In other words, the carts **22,** when locked, are precluded from longitudinal movement in the trailer **22** and are positively located in fixed positions with respect to the other carts **21** within a row and apart from the other row to thereby maintain the width of the aisle **158** within predetermined limits. The opening **70** in each bracket **57** is preferably elongated in the lateral direction as illustrated in Figure 9E to permit limited lateral movement of the carts **21.**

As the first cart **21** is wheeled into the trailer **22,** it is moved toward the front **125** and oriented such that its back corner rails **35** are positioned against one of the side walls **23** of the trailer **22.** The leading locking post **58** of the cart **21** is guided into the open aft end **69** (i.e., the end nearest the rear **126** of the trailer) of the locking channel **68** of the foremost bracket **57** (i.e., the bracket **57** nearest the front wall **125** of the van trailer **22**), while at the same time the locking post **58** on the aft or trailing end of the cart **21** is guided into the locking channel **68** of the next adjacent bracket **57** along the wall. Once the first cart **21** is positioned and the top opening **62** of the aft end cap aligned with the opening **70** of the bracket **57,** the foremost locking pin **71** is extended through the openings **62, 70** from above to positively position and lock the cart **21** releasably to the bracket **58** in position against the side wall. It is preferred that each locking pin **71** be tethered to the bracket **57** or side wall **125** of the trailer **22** by a lanyard L. Once the initial cart in each row R¹, R² is locked into position, each subsequent cart **21** can be positioned and retained in a similar manner until the rows R¹, R² are completed.

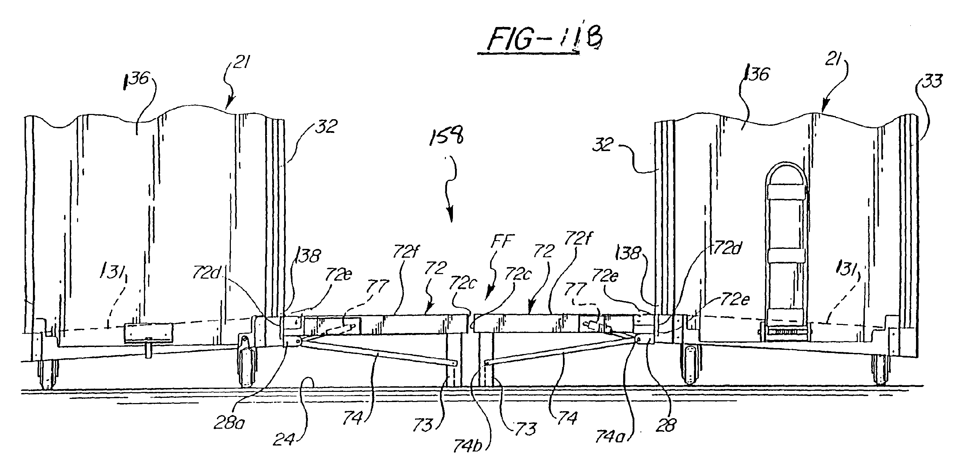

Referring now to Figure 11B, it will be seen that the floors **131** of the carts **21** are elevated above the level of the floor **124** of the trailer **22** on which the carts **21** are supported. The leading front edge of each cart floor **131** may be, for example, about 7 1/2 inches above the floor **24** of the trailer **22.**

According to the invention, it is desirable to be able to unload the mini-pallets **30** of the containers **31** from the carts **21** using a two-wheeled hand truck **127.** In effecting this, it is further operatively desirable to support the hand truck **127** at generally the level of the cart floors **31** for engaging, lifting and transporting the mini-stacks **31** with the hand truck **127.** According to the invention, a false elevated floor FF is provided in the aisle A between the rows R¹, R² to provide an upper surface that is substantially level with the almost abutting forward edges of the cart floors **131.** While various methods of constructing a false floor FF, such as by laying down overturned pallets or multiple false floor sections in the aisle **58** are possible, the safest approach is to integrate such false flooring with the beverage carts **21.**

Referring to Figures 4,5B, 5C, 11B, 5I and 5J, each cart **21** is provided with a deck section **72** having a generally rectangular platform configuration of predetermined length between opposite ends **72a, 72b** thereof and a predetermined width between opposite front and back edges **72c, 72d** thereof. The cart deck sections **72** are mounted by pivots or hinges **72e** (Figure 9D) along their back upper edges **72d** to the front ends of the cart base frames **28.** Each deck section **72** is pivotal about the axes of the hinges **72e** between an upright, stowed or closed position, illustrated in broken chain lines in Figure 5C, in which the deck section **72** extends along and is generally flush with the front corner rails **32** of the cart **21,** and a downwardly pivoted operating position, illustrated in solid lines in Figures 4, 5, and 9, in which an upper surface **72f** of each deck section **72** is substantially horizontal and level with the forward edge of the cart floor **31** so as to form a horizontal extension of the cart floor **31** forwardly of the cart **21.**

With particular attention to Figures 5C, 5I, and5J, the deck sections **72** have support legs **73** mounted pivotally at **73a** to the underside of the deck sections **72** adjacent the forward free edges **72c** of the deck sections **72.** The legs **73** may be referenced singly or multiply as leg structure. The legs **73** are coupled adjacent their lower free ends to forwardly extending brackets **28a,** fixed to the base frame **28,** by linkages, including rigid, non-foldable links **74,** pivoted at their respective front and rear ends to the legs **73** and base frame **28** brackets **28a.** The links **74** react to and are moveable with the pivoting movement of the deck sections **72** to position the legs **73** between a retracted position folded beneath and into the deck sections **72** when the deck sections are moved to the stowed position (Figure 5), and an extended floor-engaging vertical position in response to movement of the deck sections **72** to the horizontal use position (Figure 5C). The links **74** are pivoted at **74a** and **74b.** It will be seen that the pivots **72e, 74a, 73a,** and **74b** are arranged in generally parallelogram configuration in Figure 5C with the pivot or hinge point **72e** of the deck to the cart floor being rearward of link pivots **74a.**

The deck sections **72** may be fabricated of any of a number of materials such as aluminum decking or various organic polymeric materials, such as polypropylene, polyethylene, an engineered plastic or resin, or glass-filled plastics. The deck sections **72** in the illustrated embodiment are injection molded plastic members, whose upper surface **72f** is continuous and preferably molded with traction enhancing features represented by the stippled markings in Figure 5D. The upper surface **72f** is backed by structural ribbing **75,** as shown in Figures 5I and 5J, to render the deck sections **72** rigid and capable of supporting the composite weight of an operator, hand truck, and a load of stacked containers **31.** The underside is preferably formed with recesses **76** of such dimension and location as to accommodate the folding of the legs **73** and the links **74** (Figure 5I) into nested position within the deck section **72** when the deck section is moved to the stowed vertical position.

The deck sections **72** are spring-controlled in their movement between the stowed and use positions by gas springs **77** which bias the decks **72** over-center as the deck sections **72** move to operating position. The springs **77** positively retain or lock the deck sections **72** in both the stowed and use positions (Figure 5C). At least one or more, preferably two, gas springs **77** form part of the linkages or linkage assemblies. The gas springs **77** are of the usual type having a gas-filled cylinder **78** and a piston rod **79** which is extendable and retractable relative to the cylinder **78.** The gas springs **77** have a socket coupling **80** at each end (Figure 5I**),** connected to a laterally extending ball stud **81** provided on each cart on the deck section **72** and on the base frame **28,** respectively. The gas springs **77** are of such length and are positioned relative to the hinge axis of each deck section **72** so as to assist an operator in bodily positioning the deck section **72** between the stowed and use positions, while moving over-center of the hinge axis as the deck section **72** moves to its extreme positions to provide spring-biased retention of the deck section **70** in the stowed and use positions. The gas springs **77** in the stowed position are accommodated within recesses **77a** formed in the underside of the deck sections **72** (Figure 5I).

In operation, once the carts **21** are loaded and locked in their rows R¹, R² within the trailer **22,** the deck sections **72** are manually pivoted downwardly to their horizontal use positions in which the automatically outwardly pivoted legs **73** engage the floor **124** of the trailer **22.** In the stowed position of decks **72,** the gas springs maintain a pressure which must be overcome in order to swing the decks **72** out of the locked position. Because of the leverage resulting from manually pushing the front edge of each deck **72** downwardly, and the weight of the deck itself, little force is needed to compress the gas springs **77** sufficiently to initiate and maintain downward pivoting of the deck section and cause links **74** to move legs **73** from nested position to an extended position in which gas springs **77** bias them downwardly.

When the compressing gas springs move past center (i.e. hinge axis **72e**) the gas springs exert pressure below the hinge axis **22e** so that downward pressure is exerted on the deck **72** and legs **73.** This locks or retains the deck in horizontal position. When the deck **72** is to be restored to stowed position, little lifting force is required to extend the gas springs sufficiently to unlock deck **72** and legs **73.** As the deck swings up past the hinging axis **72e,** the gas springs **77,** which were compressed when swung downwardly, assist the upward pivoting movement of deck **72** and the pivoting of legs **73** via links **74** toward nested position. As shown best in Figures 4, 11B, and 9C, the predetermined length and width dimensions of the substantially abutting deck sections **72** are so selected as to provide a near-continuous elevated false floor surface along the aisle **158** at the same level as the front edge of the floor **31** of the carts **22,** while the deck sections **72** of longitudinally adjacent and laterally opposite carts **22** may be sized to substantially abut one another, it is preferred that some play be provided to account for tolerances and variations in the positioning of the carts by the brackets **57.** For example, about a % to N inch spacing S between the facing sides **72a, 72b** and front edges **72c** of adjacent deck sections **72** will provide a near-continuous false floor FF while allowing for variations in tolerance and positioning (Figure 9C).

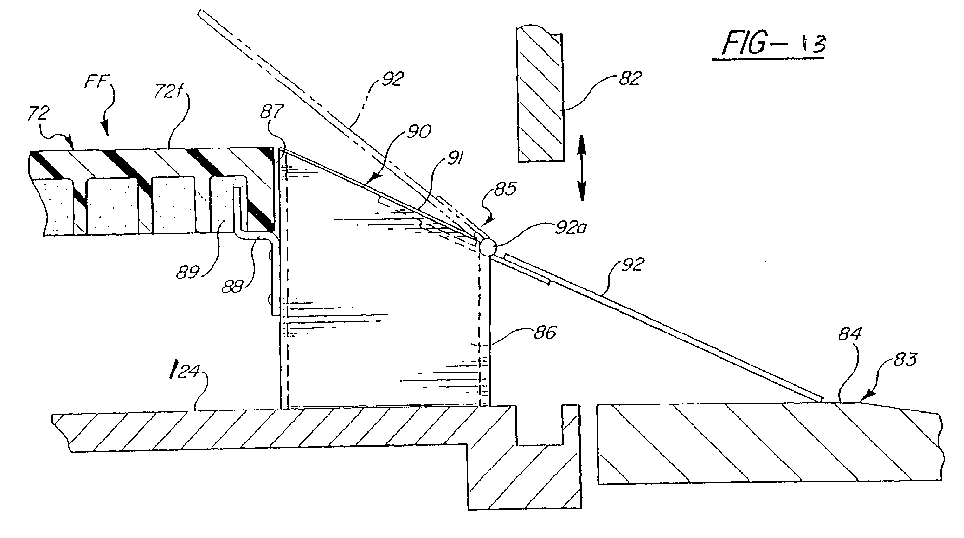

The van trailer **22** is preferably of the type having a back door or doors **82** (Figure 13) that open to provide access to the interior of the trailer **22.** A conventional powered lift gate **83** provided at the unloading dock is movable between an elevated position (Figure 13) in which an upper surface **84** of the gate is level with the floor **24** of the trailer **22,** and a lowered ground-engaging position facilitating the off-loading of cargo from the trailer **22.** It will be seen from Figure 13 that the false floor FF provided by the deck sections **72** is at a level above the upper surface **84** of the lift gate **83** when the latter is in the elevated position.

According to one aspect of the invention, a ramp, generally designated **85,** is positioned between the false floor FF and the lift gate **83** to provide a transition between the floor FF and platform of the lift gate **83.** The ramp **85** has a body **86** supported on the floor **24** of the trailer **22** adjacent the exposed side edges **87** of the rearward-most deck sections **70** of the carts **21.** A pair of upturned hooks **88** are mounted on a forward end of the ramp body **86** and are extendable beneath the exposed side edges **72b** of the rearward-most deck sections **72** where they are received in corresponding recesses or sockets **89** provided on the underside of the deck sections **72** for securing the ramp **85** releasably to the false flooring end sections.

The body **86** of the ramp **85** has a sloped support surface **90** that extends from the false floor FF to the upper surface **84** of the lift gate **83.** The support surface **90** is preferably segmented to include a fixed section **91** and a hinged section **92** that is moveable about hinge **92a** selectively between an extended use position shown in solid lines in Figure 18 in which the section **92** extends over and is supported on the surface **84** of the lift gate **83,** and a stowed position, shown in broken chain lines, in which the section **91** is folded inwardly of the door **82** of van trailer **22** and its fixed section **92,** so as to provide clearance for the closing of the back door(s) **82** of the van or trailer **22.**

Upon arrival at a point of delivery, the operator simply wheels the hand truck **127** down the aisle A along the elevated false floor FF and selects the cart or carts **22** and location or locations of the mini-stacks of containers **31** within the cart(s) corresponding to the particular order involved. The hand truck **27** (Figure 8A), except for the nose plate which will be described hereinafter, is of conventional construction and has an upright handled frame 93 mounting a pair of wheels **94** off the back of the frame **93,** and a nose plate **95** off the front of the frame **93.** A typical hand truck is disclosed in U.S. patent 3,997,182.

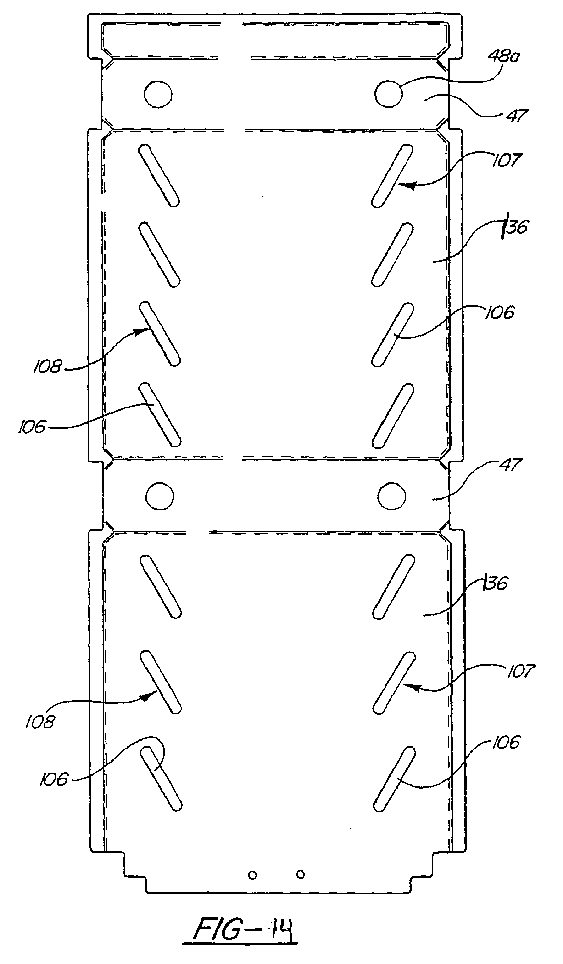

Referring to Figure 14, the nose plate **95** illustrated has a generally L-shaped profile with a generally horizontal load-supporting platform **96** and an upright back wall **97** fixed to the frame and supporting the platform **96.**

To off-load the appropriate mini-stacks of containers **31,** the operator simply extends the platform **96** of the nose plate **95** beneath the mini-pallet **30,** which is elevated above the floor **131** of the cart **21** by spaced side feet or rails **98** to provide clearance below the mini pallet **30** for the nose plate **95.** Once positioned, the operator rocks the hand truck **127** rearwardly to transfer the palleted containers **31** onto the hand truck **127.**

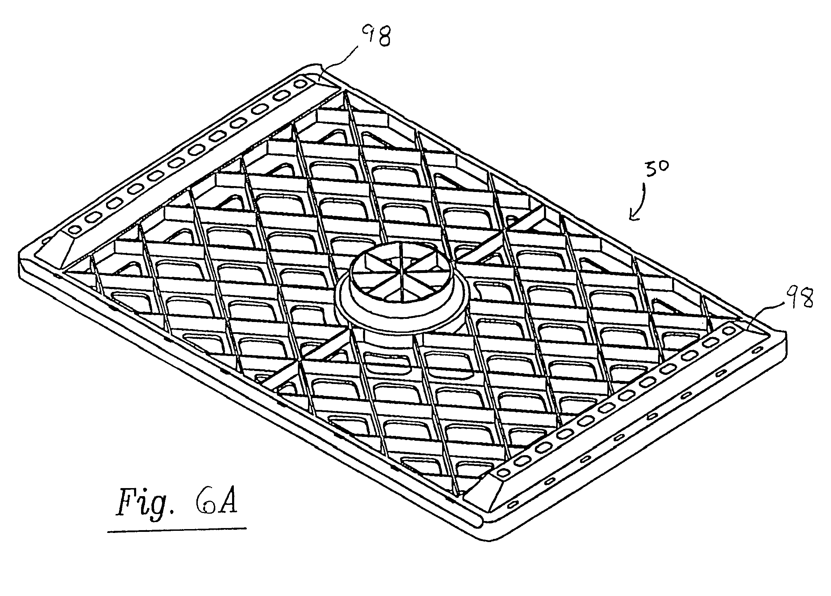

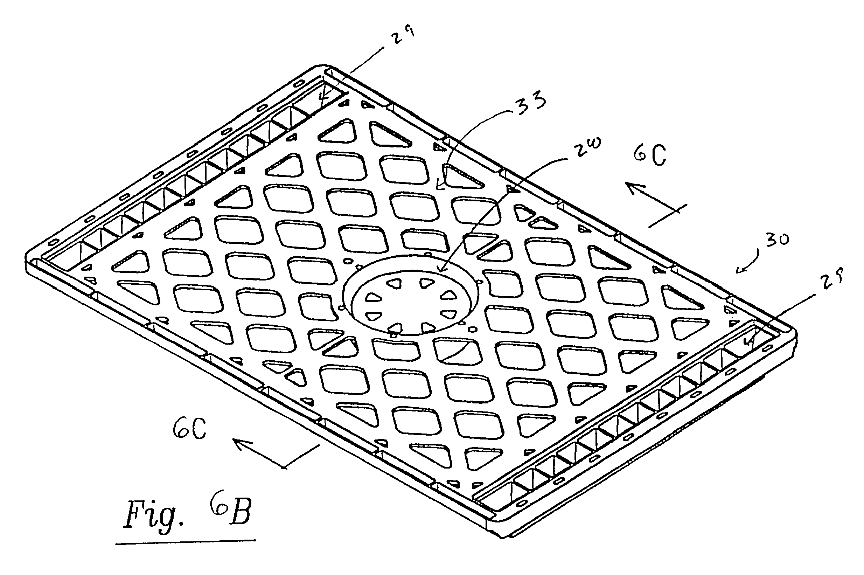

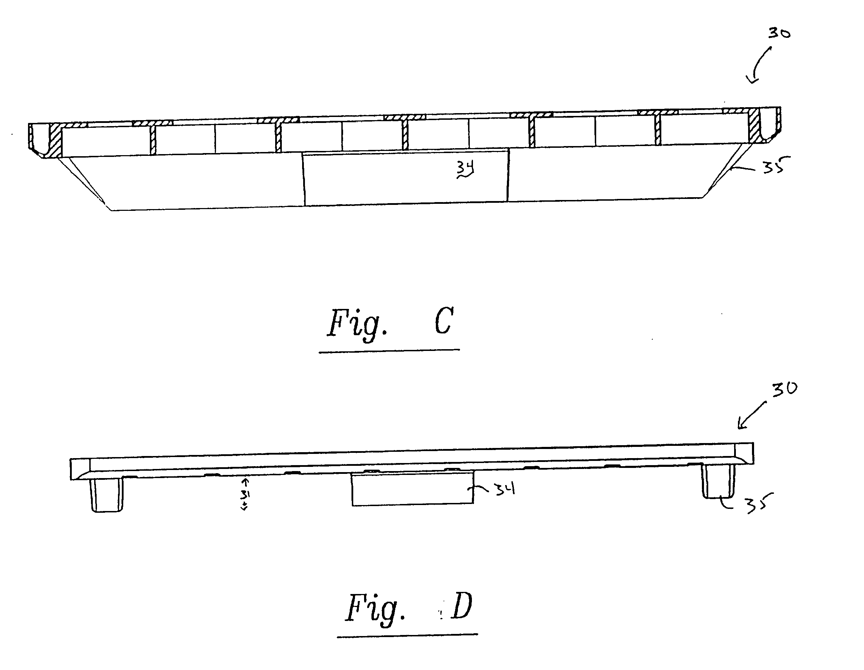

The mini-pallets involved with the present system has, in addition to side feet **98,** a downwardly projecting central disc or piloting pad **99** that is generally cylindrical in configuration and engages the floor **31** of the cart **21.** The pad **99** is spaced inwardly from the front edge of the mini-pallet **30.** One preferred embodiment of the mini-pallets **30** according to the present invention, designed by Rehrig Pacific Company, Inc., is illustrated in Figures 6A-D. The primary functional aspects of the mini-pallets **30** include an upper open work planar surface **133** approximately 11 " x 17" in size. This size will accommodate a case of 12 ounce canned beverages and other equivalent SKU package sizes. The mini-pallet **30** should not have a raised flange at the edges as the various SKUs have differing dimensions. Furthermore, mini-pallets **30** have a central support **34,** or piloting pad **99** (Figure 6B), which is preferably circular in shape. At the longitudinal edges of mini-pallets **30** are supporting legs **99** which together with the center support **134** provide approximately 3/4" clearance for the planar open work surface **133.** The planar surface **133** preferably contains many openings not only to reduce the amount of material used in manufacture, but also to permit easy drainage for any inadvertent beverage leakage. Bevels at the ends of supporting legs **99** are preferably approximately 45°. The diameter of the center support **134** is preferably about 3".

The mini-pallets **30** are adapted to be utilized in connection with specially configured hand-trucks. A suitable hand-truck is the narrow aisle configuration of hand-truck model number B16-D-1040-C45-62 available from MagLine, Inc. The wing or tongue **96** of hand truck **127** shown in Figures 8A and 8B is specifically adapted to include a recess **100** sized only slightly larger than the center support **99** of mini-pallet **30.** The tongue **96** may be inserted in the approximate 3/4" clearance space **131** beneath a loaded mini-pallet **30.** In this fashion hand truck **127** may be used to easily lift the mini-pallet and any stack of soft drinks **31** on the pallet **30.** The mating of the tongue recess **100** of hand truck **127** and the central support member **99** of the mini-pallet assists in the positioning of the hand truck tongue **96** centrally beneath the mini-pallet **30.** When stacked, the central support **99** and edge supports **98** of a top mini-pallet **30** fit into corresponding indentations **129, 128** as shown in Figure 8B, of a bottom mini-pallet.

To accommodate disc **99,** platform **96** is provided with a recess or cut-out **100** that extends from a forward edge **101** of the platform **96** inwardly toward the back wall **97** and terminates short of the back wall **97.** The curvilinear base **102** of the cut-out **100** conforms in size, shape and location to the circular pad or disc **99** on the mini-pallet **30.** Such a nose plate **95** enables the mini-pallets **30** to be fully received and supported on the platform 96 with the pad **99** accommodated within the cutout **100.**

It is preferred also that the cut-out **100** have side walls **103** that converge from the forward edge **101** to the base **102** for piloting the pad **99** into the cut-out **100.** A taper of about 5 degrees is preferable. The cut out **100** gives the platform **96** a generally U-shaped configuration, when viewed in plan as in Figure 8B, which has side portions **104** on either side of the cut-out **100** joined by a flat connecting or bridging plate portion **105** extending behind the cut-out **100** continuously between the side portions **104.** The provision of the continuous connecting or bridging plate portion **105** provides the platform **95** with strength and rigidity to prevent it, and particularly the side portions **104,** from flexing under load.

As shown in Figure 12, alternatively, the side and back walls **136** and **137** are modified to provide viewing slots **106** which are provided in two vertical rows **107** and **108** extending along the side edges of the side and back walls **136** and **137,** respectively. The through slots **106** are diagonally disposed to enhance their viewing function.

Once the palleted containers **31** are loaded onto the platform **96** of the hand truck **27,** the operator simply wheels the hand truck **27** along the elevated false floor FF toward the open back **26** of the trailer **22,** down the ramp **85,** and onto the elevated lift gate **83,** whereupon the gate **83** is lowered to the ground to permit the containers **31** to be wheeled into the facility of the retailer or other receiving party. The process is repeated until the delivery of the order is completed, after which the hand truck **27** is loaded onto the vehicle, the ramp **85** folded to the stowed position, the door(s) of the trailer **22** closed, and the trailer transported to the next delivery site.

Once the trailer **22** has been emptied of product, it is returned to the distribution center where the ramp **85** is detached and removed, the deck sections **70** raised to their stowed positions, and the carts **22** unlocked and removed from the trailer **22** in reverse order for restocking with new product.

If a combination route is being assembled with both bulk and route accounts, the last two mini-pallet containers **21** on either side of the aisle **158** may be rolled in the aisle **158** toward the front of the trailer **22** and secured using an aisle canvas door **122a.** This will permit the loading of four bulk pallets **159** in the rear of trailer **22** as illustrated in Fig. 9A. As previously mentioned, the use of aisle pallet doors will also permit the loading of separate mini-pallet **30** and product **31** stacks in the aisle **158** as shown in Figures 11A and 10A.

If a combination route is assembled, bulk pallets **159** must be delivered first. Once that delivery has taken place, the mini-pallet containers **21** in the aisle **58** may be relocated to the sidewalls of the trailer **22** and the route may continue.

Once at an account on his route, the driver will unfold the lift gate **152** and open the rear door **155.** The driver may then lower and ride up the lift gate **152** to a position level with the trailer floor and locate the product stacks **31** and the mini-pallet container **21** which correspond to the stock. The stop number is preferably located on each pallet ticket and attached to an easily visible clip bar **26** or placed in a clear plastic pocket **149** on the front of the canvas door **122** within each bay or mini-pallet or on each mini-pallet container **21.** The driver then releases the straps **23** on the canvas door **122** and opens the door to the mini-pallet container **21** exposing the product stacks for that account. The product stacks **31** are then removed using the two-wheel hand truck **127** which is designed to interface with the mini-pallet 30 at the bottom of each stack of product **31.** Hand trucks **127** preferably have wheels spaced only about 18" or less apart to permit sufficient maneuverability within the trailer **22.**

The entire order, which may include multiple mini-pallet stacks **31,** is placed on the lift gate **152** and lowered to ground level for delivery. Once the delivery is completed, the driver then returns to the vehicle with any returned product, shells, or empty mini-pallets **30** and places them into an empty mini-pallet container **21** and secures the load with the canvas door **122** and straps **123.** The driver then proceeds to the next account. When the route is complete the vehicle returns to the beverage warehouse **10** and is checked in at the gate or dock. Prior to loading for the next route, the vehicle is backed into the dock to be stripped. If plastic pallets are utilized in the aisle to form a false floor, they are removed or alternatively folding floor sections **25** are folded up, and each mini-pallet container **21** is released from the wall and rolled off the trailer **22** by an order filler **19.** The canvas doors **122** to the mini-pallet containers **21** are opened and wrapped around to the back or side of the containers **21** and attached. Then the mini-pallet containers **21** are ready for the order filler **19** to pull around the warehouse **10,** possibly using a man ride tugger vehicle, to return any shells or returned product to the appropriate location within the warehouse, and commence the order filling process previously described.

It will be appreciated that this delivery system provides increased productivity and maximizes case delivery per hour on delivery routes, in large part by reduction of frequency of handling product. In addition, this results in improved customer service levels, reduced instances of misloaded products, provides more time for delivery personnel to attend to product presentation in the customer outlet, and permits a driver to more accurately meet customer delivery window times. The mini-pallets **30** according the present invention will reduce product damage both during handling with hand trucks **127,** and when utilized as a base for in-store product displays by retailers.

The mini-pallet system also facilitates the accommodation of many SKU's in a single trailer **22** by moving the order building process to the relatively spacious and well-stocked warehouse facilities instead of the bays of a side delivery trailer. The loading and delivery process provides an ergonomically friendly work environment, with reduced lifting and twisting for delivery drivers, and no necessity to dig product out of side load truck product bins. This should result in extended work force tenure through both improved employee morale, and reduced workplace injuries. Furthermore, the improved route truck trailer **22** permits unparalleled delivery flexibility in that the same trailers can be used to deliver both bulk and route accounts on the same route, or be used completely for route accounts, or the trailer can be converted to complete bulk account usage by removing the mini-pallet containers.

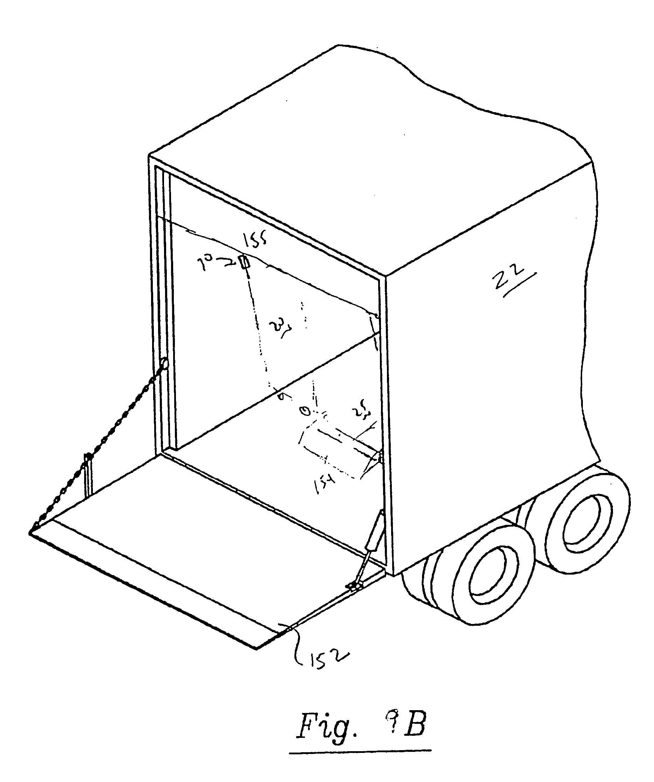

An alternative mini-pallet container **121** depicted in Figure 12, may be utilized to avoid the maintenance issues associated with casters **21** on mini-pallet containers **21.** Such a mini-pallet container **121** would require a fork lift **19.** utilizing a custom clip attachment, to load and unload mini-pallet containers **121** from the truck trailer **22.** These mini-pallet containers **121** could be placed on a man ride pallet jack (not shown) to be traveled around the warehouse **10** by the order filler **19.** In all other material respects, the use of the mini-pallet container **121** in Figure 10 is similar to the mini-pallet container **21** depicted in Figures 3A through 3D. It will be noted that unless the mini-pallet containers have casters **21,** it will not be possible to place a bulk load **59** at the end of the trailer **22** and maintain the extra mini-pallet containers **21** in the aisle of the trailer **50.** However, a combination trailer can still be loaded simply by utilizing only 10 or 12 mini-pallet containers **121** as shown in Figure 9, where ten mini-pallet containers **121** are in place together with four bulk pallets **159** for loading dock delivery.

An alternative trailer configuration is shown if Figure 10. In this construction, a trailer is provided with 14 aluminum or plastic folding bay walls **155,** with canvas door and locking pins, shown in greater detail in Figure 7B. In this fashion, the folding bay walls **155** act to help secure mini-pallet stacks **31** or mobile beverage carts **21** in their position in the trailer **22.** When desired, the folding walls **155** can be collapsed flush against the trailer wall **156** to permit the trailer to be utilized partially or completely for bulk purposes.

It will be understood that yet another variation of the use of account loaded mini-pallets **30** may be undertaken without the use of mini-pallet containers **21, 121.** In this scenario, the product stacks **31** are built to account orders on mini-pallets **30** within the warehouse and then loaded by hand truck **127** into appropriate bays **157** on the trailer **22.** Figure 10A shows the use of mini-pallets **30** without any mini-pallet containers **21,121.** In this setting, it is unnecessary to have flooring such as provided by fold down floors **25** to raise the height of the hand truck **127** to the level of the mini-pallets **30** within mini-pallet containers **21, 121.**

In the alternative design of Figure 8A. the folding curtains **122** are not found on mini-pallet containers **21,121,** but are instead located at the front of each bay **57.** Once the trailer **22** is loaded, the canvas doors **122** are unfolded and attached to retain the product. During the delivery process, the driver/delivery person proceeds through the same steps except the product stacks **31** or mini-pallets **30** are simply unloaded from bays **157** rather than mini-pallet containers **21, 121.**

While the preferred embodiments of the invention have been described above in detail, it is to be understood that variation and modifications can be made therein without departing from the spirit and scope of the present invention as set forth in the following claims. For example, the invention can be used with various beverage transport bodies such as trucks or trailers. The vehicle can have somewhat different dimensions and a different number of bays or mini-pallet containers than described above. It is the aim of the appended claims to cover all changes and modifications that may be made without departing from the spirit and scope of the invention.

## Claims

1. A transport cart, adapted to be supported for travel in a van body having a floor, and joined to like carts positioned fore to aft in laterally spaced rows leaving an aisle between them in the van body, the cart having a bottom on which stacks of product are carried on mini-pallets at a level above said van floor and an open front side to permit the unloading of product from said bottom comprising: a deck movable from a stowed retracted position to an extended generally horizontal aisleway-forming operative position in which laterally aligned opposed like carts in the rows can form a false floor aisleway at substantially the level of said cart bottom.

2. The transport cart of claim 1, wherein the mini-pallets of the type having a deck with two downwardly projecting rails spaced apart from one another.

3. The transport cart of claim 2 wherein a downwardly projecting center support of the mini-pallets is intermediate the two downwardly projecting rails, and a pocket coaxial with said center support is adapted to receive at least a portion of a similarly shaped mini-pallet's center support when multiple mini-pallets are nested.

4. The transport cart as claimed in any of claims 1 to 3, wherein the transport cart has rear side lock members engaging with longitudinally spaced mountings on the van side walls to secure the transport cart in position.

5. The transport cart as claimed in any of claims 1 to 4, wherein the transport cart has side walls and a back wall and elongate tracks with multiple laterally spaced securing positions are laterally mounted across the transport cart walls and a tarp having vertical edges is disengageably secured to one of said track securing positions on one of said walls to wrap about products within the cart from the open front side thereof when said tarp is disengageably secured to a securing position on a track on another of side walls.

6. The transport cart of any of claims 1 to 5, having a rear corner post portion projecting upwardly from both rear corners, said post portions having lock fittings to engage fitting on walls of the van body.

7. The transport cart of claim 6, wherein the rear post portions have upper ends with sockets, to receive lock pins.

8. The transport cart of claim 5, wherein the tarp further comprises at least one see through panel.

9. The transport cart of claim 5, wherein the tarp further comprises at least one batten pocket and at least one batten located therein.
